# EUROPÄISCHE PATENTANMELDUNG

(11) **EP 0 945 341 A1**
(43) Veröffentlichungstag der Anmeldung: **29.09.1999**
(21) Anmeldenummer: 98116783.6
(22) Anmeldetag: 05.09.1998
(51) Int. Cl.: B64C 1/00, B60K 5/08

(54) **Antriebssystem für Fahrzeuge und stationäre Anlagen**

(30) Priorität: 27.03.1998 EP 98105615
(71) Anmelder: Frick Aerotech AG, 9490 Vaduz (LI)
(72) Erfinder: Frick, Alexander, 8874 Mühlehorn (CH)
(74) Vertreter: Troesch Scheidegger Werner AG

(57) **Zusammenfassung**

Das Antriebssystem umfasst mindestens zwei unabhängige Verbrennungsmotoren (4, 5), welche unmittelbar nebeneinander angeordnet und synchronisiert sind, von denen jeder auf eine gemeinsame Antriebswelle (9) wirkt. In jeder individuellen Antriebsverbindung (4 zu 9 bzw. 5 zu 9) sind Mittel vorgesehen, um bei merklichem Leistungsabfall diese Verbindung zu unterbrechen (Sollbruchstelle, automatische Kupplung).

## Beschreibung

Die vorliegende Erfindung betrifft ein Antriebssystem nach dem Oberbegriff von Anspruch 1.

Beim Antrieb beispielsweise von Fluggeräten werden an den bzw. die Motoren höchste Anforderungen bezüglich Betriebssicherheit gestellt. Das Problem kann z.B. dadurch gelöst werden, dass zwei völlig unabhängige Motoren eingesetzt werden. Aus Gewichtsgründen kam das bis heute nur für grössere Leistungen in Frage.

Bei Antriebssystemen mit nur einem Verbrennungsmotor wird eine relativ aufwendige Doppelzündung verlangt, welche jedoch nur gegen gewisse Störungen im Zündungssystem wirksam ist.

Bei einmotorigen Antriebssystemen ist ein merklicher Leistungsabfall praktisch gleichbedeutend mit Totalausfall.

Für VTOL-Fluggeräte, insbesondere mittels Luft- bzw. Gasströmen im Flug gehaltene Fluggeräte kleinerer Abmessungen, kam bisher nur ein einzelner Motor für den Antrieb in Frage. Ein Motorausfall war auch hier gleichbedeutend mit Totalausfall und damit Absturz. Auch hier stand aus Gewichtsgründen und insbesondere Kostengründen die Lösung mit zwei separaten Motoren nicht zur Diskussion.

Dieses Problem besteht grundsätzlich auch für alle anderen Arten von Fahrzeugen, wie beispielsweise Automobilen oder Schiffen, bei welchen der Ausfall des einzigen Antriebsmotors zur Betriebsuntüchtigkeit des jeweiligen Fahrzeuges führt.

Auch wenn in der Regel die daraus resultierenden Folgen weniger schwerwiegend sind als bei Luftfahrzeugen, so kann auch der Ausfall bei land- resp. wassergestützten Fahrzeugen zu grossen Unannehmlichkeiten oder Problemen führen. So wird ein motorgetriebenes Wasserfahrzeug bei ausgefallenem Antrieb steuerlos auf dem Wasser treiben und damit andere Fahrzeuge gefährden oder auf Grund auflaufen können. Auch bei landgestützten Fahrzeugen kann der Ausfall des einzigen Antriebsmittels zu Problemen für die Insassen führen, insbesondere wenn dies in abgelegenen Gebieten auftritt, in denen keine unmittelbare Hilfestellung erfolgen kann.

Aufgabe der vorliegenden Erfindung war es nun, ein Antriebssystem zu schaffen, welches das Problem des totalen Ausfalls des Antriebssystems löst.

Bei einem Antriebssystem der eingangs definierten Art konnte die gestellte Aufgabe erfindungsgemäss durch die Merkmale gemäss dem kennzeichnenden Teil von Anspruch 1 gelöst werden.

Besondere Ausführungsformen des erfindungsgemässen Antriebssystems sind in den abhängigen Ansprüchen definiert.

Die erfindungsgemässe Lösung hat überraschenderweise gezeigt, dass mit dem neuen Konzept im Vergleich zu einem einzigen Antrieb das totale Ausfallrisiko praktisch verschwindet und dafür die Sicherheit wesentlich erhöht werden kann, ohne dass dabei die Kosten untragbar hoch werden. Dank dem erfindungsgemäss ausgebildeten Antriebssystem kann die Grösse des einzelnen Motors so gewählt werden, dass beide resp. alle Motoren zusammen die geforderte Gesamtleistung ergeben. Da sich die einzelnen Motoren nun sowohl für eigenständige Anwendung als Einzelmotor wie auch in erfindungsgemässen Kombinationen eigenen, können diese in einheitlicher Ausführung in grossen Stückzahlen produzieren, welche die Kosten für den einzelnen Motor unerwartet tief halten.

Das erfindungsgemässe Antriebssystem eignet sich vorzugsweise für kleinere Fluggeräte, bei welchen aus Gewichts- und Kostengründen zwei konventionelle Motoren nicht in Frage kommen und durch zwei oder mehrere unabhängige leichte Motoren, die direkt nebeneinander angeordnet, mechanisch miteinander synchronisiert auf eine gemeinsame Antriebswelle wirken, ersetzt werden. Wesentlich dabei ist die zwangsläufige bzw. automatische Abkopplung eines gegebenenfalls ausfallenden Motors von der gemeinsamen Antriebswelle. Zumindest ein für eine Notlandung ausreichender Weiterflug ist nach Abkopplung des ausfallenden Motors gewährleistet. Dies ist möglich, weil die Leistung des verbleibenden Motors nicht durch Verluste durch den nicht mehr betriebstüchtigen Motor beeinträchtigt wird.

Das erfindungsgemässe Antriebssystem eignet sich vorzugsweise weiter auch für kleinere land- oder wassergestützte Fahrzeuge, bei welchen ebenfalls aus Gewichts- oder Kostengründen der Einbau von zwei konventionellen Motoren nicht in Frage kommt. Bei diesen Anwendungsbereichen kommt überdies vorteilhaft dazu, dass jeweils ein oder mehrere Motoren des Antriebssystems auch im Normalbetrieb abgekoppelt werden können, nämlich wenn nicht die volle Antriebsleistung sämtlicher Motoren benötigt wird. Damit kann der resp. die einzelnen Motoren in ihrem optimalen Bereich betrieben werden, was einen verbesserten Wirkungsgrad des Antriebssystems bei reduzierten Treibstoffverbrauch im Vergleich zu einem einzelnen, aber entsprechend leistungsstarken Motor zu Folge hat.

Die Erfindung wird nachstehend anhand eines in der Zeichnung dargestellten Ausführungsbeispieles noch etwas näher erläutert.

Es zeigt:

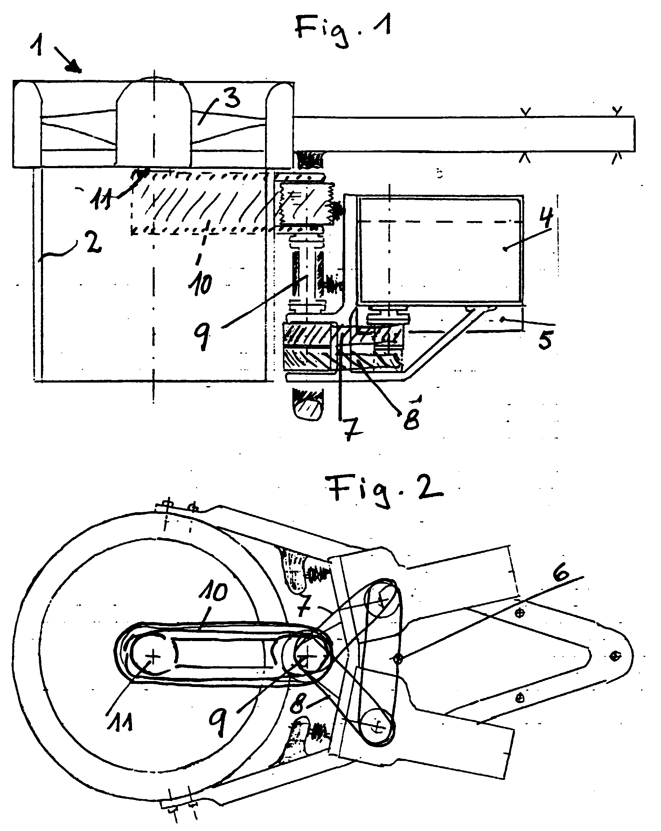

- Fig. 1: eine Seitenansicht, rein schematisch, eines erfindungsgemässen Antriebssystems für Fluggeräte und
- Fig.: 2 eine Ansicht von unten auf die Anordnung nach Fig. 1.

Das in der Zeichnung gezeigte erfindungsgemässe Antriebssystem eignet sich beispielsweise für kleine VTOL-Fluggeräte bzw. Triebwerke, für welche bisher aus Gewichts- und Kostengründen zwei separate Triebwerke nicht in Frage kamen.

Das in den Fig. 1 und 2 gezeigte Antriebssystem dient dem Antrieb eines Flügelradkompressors 1 mit Luftkanal 2 (Teil eines Schubrohrsystems) für leichte VTOL-Fluggeräte. Für den Antrieb des Flügelrades 3 sind zwei kleine Verbrennungsmotoren 4 und 5 vorgesehen, welche über eine mechanische Verbindung, z.B. Zahnriemen 6, miteinander synchronisiert sind. Jeder der beiden Verbrennungsmotoren 4, 5 weist für den angestrebten Zweck geringe Gesamtabmessungen auf (z.B. ca. 500 x 250 x 300 mm). Die unmittelbar nebeneinander angeordneten Motoren 4, 5 weisen einen identischen Aufbau und gleiche Leistung auf. Die Motoren 4, 5 treiben über jeweils eine eigene Antriebsverbindung 7, 8 (z.B. Zahnriemen) eine gemeinsame Antriebswelle 9 für den Kompressor 1 an (der Antrieb kann von der Welle 9 z.B. über einen Riementrieb 10 auf die Welle 11 des Flügelrades 3 erfolgen).

Die Leistung der beiden Motoren 4, 5 ist so ausgelegt, dass damit der Flugbetrieb möglich ist. Sollte einer der beiden Motoren 4, 5 ausfallen, genügt die Leistung des zweiten Motors zumindest für eine Notlandung.

Damit dies aber bei der beschränkten Leistung der Motoren 4, 5 gewährleistet ist, muss bei Ausfall eines Motors dessen Antriebsverbindung zur gemeinsamen Antriebswelle 9 des Auftrieb/Vortriebaggregates (Kompressor 1) unterbrochen werden, so dass der arbeitende Motor nicht zusätzlich Leistung verliert, um den nicht mehr betriebstüchtigen Motor "mitzubetreiben".

Der Unterbruch der Antriebsverbindungen zwischen den Motoren 4, 5 und der Welle 9 kann über Sollbruchstellen in einem Verbindungsglied, automatische Kupplungen und dergleichen erfolgen (an irgendeiner Stelle zwischen Motorausgang und Eingriff auf die Welle 9).

Der Unterbruch der Antriebsverbindung erfolgt automatisch, z.B. bei Auftreten einer Bremskraft (drehmomentabhängige Steuerung) in der Verbindung.

Beim Einsatz für land- resp. wassergestützt Fahrzeuge resp. für den stationären Betrieb erfolgt der Unterbruch der Antriebsverbindung vorteilhafterweise über eine automatische Kupplung, welche von einem Steuerungsteil angesteuert wird. Das Steuerungsteil kann wechselnde Parameter wie Leistungsbedarf etc. erfassen und auswerten und dementsprechend die Abkuppelung steuern.

## Patentansprüche

1. Antriebssystem für Fahrzeuge oder stationäre Anlagen mit einer Antriebsmotoranordnung und Übertragungsmitteln an das Fahrzeug resp. die Anlage, dadurch gekennzeichnet, dass die Antriebsmotoranordnung mindestens zwei voneinander unabhängige, miteinander synchronisierte Motoren mit jeweils gleicher oder ähnlicher Leistung umfasst, von denen jeder auf eine gemeinsame Antriebswelle wirkt, und dass Mittel vorgesehen sind, um die Antriebsverbindung eines beliebigen der beiden oder mehreren Motoren mit der gemeinsamen Antriebswelle zu unterbrechen.

2. Antriebssystem nach Anspruch 1, dadurch gekennzeichnet, dass die Unterbruchmittel in jeder der Antriebsverbindungen zwischen den unabhängigen Motoren und der gemeinsamen Antriebswelle aus einer Sollbruchstelle in der Antriebsverbindung bestehen.

3. Antriebssystem nach Anspruch 2, dadurch gekennzeichnet, dass die Unterbruchmittel in jeder der Antriebsverbindungen zwischen den unabhängigen Motoren und der gemeinsamen Antriebswelle aus einer vorzugsweise selbsttätig wirkenden Kupplung in der Antriebsverbindung bestehen.

4. Antriebssystem nach einem der Ansprüche 1 bis 3, dadurch gekennzeichnet, dass die unabhängigen Motoren Verbrennungsmotoren sind, von denen bei Ausfall eines Motors der Betrieb der übrigen Motoren ausreicht, um das Fahrzeug weiterhin in einem Notbetrieb zu bewegen.

5. Antriebssystem nach einem der Ansprüche 1 bis 4, dadurch gekennzeichnet, dass die unabhängigen Motoren von identischer Bauart sind.

6. Antriebssystem nach einem der Ansprüche 1 bis 5 für ein Fluggerät, insbesondere ein Fluggerät, welches durch von einem Flügelradkompressor erzeugte Luftströme im Flug gehalten wird, dadurch gekennzeichnet, dass die gemeinsame Antriebswelle auf die Auftrieb-/Vortriebaggregate wirkt, und dass Mittel vorgesehen sind, um bei Ausfall eines beliebigen der beiden oder mehreren Motoren dessen Antriebsverbindung mit der gemeinsamen Antriebswelle zu unterbrechen..
